# EUROPÄISCHE PATENTANMELDUNG

(11) **EP 1 987 980 A2**
(43) Veröffentlichungstag der Anmeldung: **05.11.2008**
(21) Anmeldenummer: 08450045.3
(22) Anmeldetag: 31.03.2008
(51) Int. Cl.: B60M 1/26, B60M 1/28

(54) **Verfahren und Vorrichtung zur Montage einer Oberleitung**

(30) Priorität: 04.05.2007 AT 6932007
(71) Anmelder: Alpine-Energie Österreich GmbH, 4030 Linz (AT)
(72) Erfinder: Hofbauer, Gerhard, 2020 Hollabrunn (AT); Hofbauer, Werner, 2020 Hollabrunn (AT)
(74) Vertreter: Sonn & Partner Patentanwälte

(57) **Zusammenfassung**

Die Erfindung betrifft ein Verfahren und eine Vorrichtung (7) zur Montage einer entlang einer Gleisachse (6) verlaufenden Oberleitung (1), bei dem ein an einem Ende (5) fest verankerte und am anderen Ende gespannter Fahrdraht (4) der Oberleitung (1) an einem Drehausleger (2) aufgehängt wird, indem eine Einstellvorrichtung (7) am Fahrdraht (4) der Oberleitung (1) beiderseits des Drehauslegers (2) angeordnet wird und der Drehausleger (2) um einen unter Berücksichtigung der aktuellen Temperatur und der Länge (L) des Fahrdrahtes (4) vom fest verankerten Ende (5) zum Drehausleger (2) ermittelten Einstellwert (X), der an der Einstellvorrichtung (7) eingestellt wird, gegenüber einer Referenzposition (P_{R}) des Drehauslegers (2) verstellt wird. Zur möglichst genauen Einstellung ist vorgesehen, dass zur Ermittlung der Referenzposition (P_{R}) des Drehauslegers (2) die Einstellvorrichtung (7) parallel zur Gleichachse 6 angeordnet wird. Bei dem Einstellwert (X) kann auch die erwartete Reckung berücksichtigt werden.

## Beschreibung

Die Erfindung betrifft ein Verfahren zur Montage einer entlang einer Gleisachse verlaufenden Oberleitung, bei dem ein an einem Ende fest verankerter und am anderen Ende gespannter Fahrdraht der Oberleitung an einem Drehausleger aufgehängt wird, indem eine Einstellvorrichtung am Fahrdraht der Oberleitung beiderseits des Drehauslegers angeordnet wird und der Drehausleger um einen unter Berücksichtigung der aktuellen Temperatur und der Länge des Fahrdrahtes vom fest verankerten Ende zum Drehausleger ermittelten Einstellwert, der an der Einstellvorrichtung eingestellt wird, gegenüber einer Referenzposition des Drehauslegers verstellt wird.

Ebenso betrifft die Erfindung eine Vorrichtung zur Einstellung der Position eines Drehauslegers an einem an einem Ende fest verankerten und am anderen Ende gespannten Fahrdraht einer entlang einer Gleisachse verlaufenden Oberleitung um einen unter Berücksichtigung der aktuellen Temperatur und der Länge des Fahrdrahtes vom fest verankerten Ende zum Drehausleger ermittelten Einstellwert gegenüber einer Referenzposition, mit einem über Aufhängevorrichtungen am Fahrdraht der Oberleitung aufhängbaren Messelement mit Mitteln zur Ermittlung der Referenzposition des Drehauslegers, und mit einem Mittel zur Einstellung des Einstellwerts.

Oberleitungen, z.B. für Bahnstrecken, bestehen üblicherweise aus dem Fahrdraht, an dem der Stromabnehmer des Schienenfahrzeuges während der Fahrt gleitet, um den Antriebsmotor ständig mit elektrischer Energie zu versorgen. Der Fahrdraht wird an Auslegern, welche an entsprechenden Masten oder dgl. befestigt sind, montiert. Der Fahrdraht wird an einem Ende fest, beispielsweise an einem Mast, verankert und am anderem Ende mit Hilfe üblicher Nachspanneinrichtungen befestigt, um immer eine ausreichende mechanische Spannung der Oberleitung zu gewährleisten. Weiters wird üblicherweise der Fahrdraht an einem weiteren, oberhalb dieses geführten, Seiles, dem Tragseil, mehrmals zwischen zwei Masten aufgehängt, damit sich der Fahrdraht mit möglichst konstanter Höhe über den Schienen befindet. Die Oberleitung ist in Abschnitte, beispielsweise mit einer Länge von einigen 100 Metern, unterteilt. Entlang derartiger Abschnitte wird der Fahrdraht, je nach Streckenführung üblicherweise alle 25 bis 70 Meter, an Drehauslegern, die beispielsweise an Masten, Tunnelwandungen oder dgl. befestigt sind, montiert. Um eine gleichmäßige Abnutzung des Schleifstückes am Stromabnehmer des Schienenfahrzeuges zu erzielen, wird der Fahrdraht der Oberleitung nicht gerade, d.h. entlang der Gleisachse, geführt, sondern verläuft dieser im Wesentlichen zickzackförmig um die Gleisachse innerhalb genau festgelegter Grenzen des Abstandes zwischen Gleisachse und Fahrdrahtlage.

Aufgrund von Temperaturschwankungen kommt es zu unterschiedlichen Ausdehnungen der Oberleitung, welche Relativbewegung durch schwenkbar angeordnete Ausleger, so genannte Drehausleger, ausgeglichen wird. Je weiter der Drehausleger vom fest eingespannten Ende des Fahrdrahtes der Oberleitung entfernt ist, desto größer wirken sich temperaturbedingte Schwankungen auf eine Veränderung der Position des Drehauslegers gegenüber der idealen Position aus. Nach der Montage einer Oberleitung ist es daher erforderlich, die Drehausleger in eine Lage zu bringen, welche, bei der gerade herrschenden Temperatur, einer idealen berechneten Lage gegenüber einer Referenzposition entspricht. Als Referenzposition des Drehauslegers wird häufig die im Wesentlichen normal zur Gleisachse stehende Richtung des Drehauslegers bei einer im Mittel herrschenden Betriebstemperatur angenommen. Gegenüber dieser Referenzposition muss die Position jedes Drehauslegers um einen Einstellwert verstellt werden, welcher von der momentan herrschenden Temperatur abhängt.

Anhand von Tabellen oder entsprechenden mathematischen Formeln, können bei der jeweils herrschenden Temperatur die notwendigen Einstellwerte, um die die Drehausleger gegenüber der Referenzposition verstellt werden müssen, ermittelt werden. Üblicherweise wird die Referenzstellung des Drehauslegers, beispielsweise die im Wesentlichen senkrecht zur Gleisachse orientierte Richtung des Drehauslegers vom Monteur nach Gefühl und Augenmaß ermittelt, was jedoch mit relativ großen Unsicherheiten und Ungenauigkeiten verbunden ist. Insbesondere wird ein derartiges Verfahren dadurch erschwert, dass der Fahrdraht nicht gerade sondern, wie oben beschrieben, zickzackförmig verläuft.

Zur Unterstützung der Montage von Oberleitungen sind Verfahren und Vorrichtungen entwickelt worden, durch welche der Monteur bei der Verstellung der Drehausleger unterstützt wird.

Beispielsweise beschreibt die AT 414 228 B ein Verfahren und eine Vorrichtung zur temperaturabhängigen Montage einer Oberleitung unter Zuhilfenahme einer Einstellvorrichtung, die auf den Fahrdraht der Oberleitung angelegt wird und auf die Referenzposition ausgerichtet wird. Schließlich kann der aufgrund der herrschenden Temperatur ermittelte Einstellwert aus Tabellen abgelesen und an der Einstellvorrichtung eingestellt werden, was die Verstellung des Drehauslegers von der Referenzposition zur gewünschten Position erleichtert.

Unter der Annahme, dass die Oberleitung im Wesentlichen in einem gleichmäßigen Zickzackverlauf zur Gleisachse verläuft, kann die Referenzposition mit diesem Verfahren und dieser Vorrichtung relativ genau ermittelt werden. Aufgrund von Unregelmäßigkeiten des Zickzackverlaufs der Oberleitung, welcher stellenweise, insbesondere in Kurven, Übergängen von Gerader und Kurve, im Bereich der Unterteilung der Oberleitung, im Bereich von Weichen, befindet sich die Einstellvorrichtung jedoch meist nicht in einer Lage parallel zur Gleisachse, weshalb die Referenzposition des Drehauslegers nicht exakt ermittelbar ist. Somit kommt es auch bei derartigen Verfahren zu Unsicherheiten und Ungenauigkeiten, welche zu unzulänglichen Referenzpositionen führen.

Bei diesem bekannten Verfahren wird fälschlicherweise als Referenzposition des Drehauslegers nicht die Stellung des Drehauslegers normal zur Gleisachse, sondern die Stellung des Drehauslegers in der Winkelhalbierenden zwischen den beidseitig an den Drehausleger angrenzenden Fahrdrahtteilen verwendet und entspricht somit nicht den gestellten Anforderungen an eine qualitativ hochwertige Oberleitung.

Ein weiterer Nachteil bisheriger Verfahren und Vorrichtungen zur Montage einer Oberleitung besteht darin, dass die so genannte Reckung des Fahrdrahtes der Oberleitung nicht berücksichtigt wird. Bei der Reckung handelt es sich um eine Materialeigenschaft, die bewirkt, dass sich der Fahrdraht der Oberleitung nach dem Abspulen von der Transporttrommel in seiner Längsrichtung während der ersten Zeit nach der Belastung mit Zugspannung verlängert. Dies geschieht üblicherweise in den ersten Wochen nach der Montage der Oberleitung. Der Wert dieser Verlängerung ist in Fachkreisen bekannt und im Wesentlichen abhängig vom Abstand des Drehauslegers von der festen Verankerung, den Materialeigenschaften des Fahrdrahtes und der Zeit zwischen dem Aufbringen der Zugspannung auf den Fahrdraht nach der Montage und dem jeweiligen Betrachtungszeitpunkt, also dem Zeitpunkt der Einstellung des Drehauslegers.

Aufgrund der Umgebungstemperaturen und der oben genannten Reckung, kommt es zu einer Bewegung der Drehausleger eines Abschnitts der Oberleitung, welche gewisse Grenzen nicht überschreiten dürfen. Bei einer Überschreitung der Position der Drehausleger gegenüber der Referenzposition, also beispielsweise der Richtung normal zur Gleisachse, kann es zu unzulässig großen seitlichen Lageänderungen der Oberleitung kommen, die dazu führen können, dass der Fahrdraht vom Stromabnehmer nicht mehr kontaktiert werden kann. Der genauen Einstellung der Drehausleger kommt daher eine besonders hohe Bedeutung zu, welche, insbesondere bei Bahnstrecken für hohe Geschwindigkeiten über 200 km/h, wichtig ist.

Aufgabe der vorliegenden Erfindung ist daher die Schaffung eines oben genannten Verfahrens und einer oben genannten Vorrichtung zur Montage einer Oberleitung, durch welche eine genaue und auf die jeweiligen herrschenden Bedingungen abgestimmte Einstellung der Drehausleger möglich wird. Darüber hinaus soll die Einstellung des Drehauslegers dokumentierbar und nachvollziehbar sein, um einen Nachweis der Qualitätsanforderungen erbringen zu können. Schließlich soll das vorliegende Verfahren möglichst rasch und einfach durchführbar und die Vorrichtung möglichst kostengünstig, einfach und robust aufgebaut sein. Nachteile bekannter Verfahren und Vorrichtungen sollen reduziert bzw. vermieden werden.

Gelöst wird die erfindungsgemäße Aufgabe in verfahrensmäßiger Hinsicht dadurch, dass zur Ermittlung der Referenzposition des Drehauslegers die Einstellvorrichtung parallel zur Gleichachse angeordnet wird. Wenn bei der Ermittlung der Referenzposition des Drehauslegers die Gleisachse berücksichtigt wird, was bei bekannten Verfahren nicht in allen Situationen der Streckenführung und des Zickzackverlaufes der Fall ist, kann somit die Referenzposition des Drehauslegers auch dann, wenn der Verlauf der Oberleitung nicht regelmäßig zur Gleisachse verläuft, hinreichend genau ermittelt und somit der berechnete Einstellwert ebenfalls genau eingestellt und der Drehausleger entsprechend genau montiert werden. In der Folge kann es weniger häufig zu einer Überschreitung der zulässigen Positionen der Drehausleger kommen. Insbesondere im Bereich der Kurven, Übergängen von Gerader und Kurve, im Bereich der Unterteilung der Oberleitung, im Bereich von Weichen, ist es von großer Bedeutung, die Gleisachse bei der Ermittlung der Referenzposition zu berücksichtigen, da hier oftmals eine besonders starke Unregelmäßigkeit der Richtung der Oberleitung vom Gleisverlauf auftritt.

Gemäß einem Merkmal der Erfindung, wird die Einstellvorrichtung gegenüber dem Fahrdraht verschoben, bis sie parallel zur Gleisachse angeordnet ist. Diese Verschiebung der Einstellvorrichtung gegenüber dem Fahrdraht der Oberleitung geschieht vorteilhafterweise aufgrund von geometrischen Daten der Oberleitung in Bezug auf die Gleisachse, welche beispielsweise messtechnisch oder durch Berechnung ermittelt wurden. Insbesondere kann der Abstand, um den die Einstellvorrichtung an jeder Seite des Drehauslegers verschoben werden muss, bis diese parallel zur Gleisachse angeordnet ist, an der Vorrichtung eingestellt werden. Ist nun die Einstellvorrichtung tatsächlich parallel zur Gleisachse orientiert, kann die Referenzposition des Drehauslegers, beispielsweise die normal zur Gleisachse orientierte Position mit Hilfe eines Laserstrahls oder dgl., einfach und rasch ermittelt werden. Ist einmal die Referenzposition exakt ermittelt und wird der Einstellwert unter Berücksichtigung der aktuellen Temperatur und auch der Länge des Fahrdrahtes vom fest verankerten Ende bis zum Drehausleger exakt berechnet, resultiert eine optimale Einstellung der Position des Drehauslegers. Bei der Ermittlung des Einstellwertes kann auch die noch zu erwartende Reckung des Fahrdrahtes berücksichtigt werden. Darüber hinaus ist die Einstellung dokumentierbar und nachvollziehbar, wodurch die erforderlichen Qualitätskriterien erfüllt werden können.

Alternativ oder zusätzlich zur oben angeführten Verschiebung der Einstellvorrichtung gegenüber dem Fahrdraht, kann die Einstellvorrichtung auch gegenüber dem Fahrdraht bzw. gegenüber dessen Vorrichtungen zur Aufhängung am Fahrdraht verdreht werden, bis sie parallel zur Gleisachse angeordnet ist. Zur Unterstützung der exakten Positionierung der Einstellvorrichtung in Bezug auf die Gleisachse können entsprechende Skalen oder Messeinrichtungen an der Einstellvorrichtung angeordnet sein, über die die messtechnisch oder über Berechnungen ermittelten Parameter eingestellt werden können.

Um eine exakte Einstellung des Drehauslegers zu gewährleisten, wird die Einstellvorrichtung vorzugsweise waagrecht gehalten. Dabei ist die waagrechte Orientierung, sowohl in Bezug auf die Richtung der Gleisachse als auch in Bezug auf eine dazu normale Richtung, relevant. Die waagrechte Orientierung der Einstellvorrichtung kann durch entsprechende Gegengewichte und Tariereinrichtungen erzielt werden.

Um ein Verschieben der Einstellvorrichtung nach der Ermittlung der Referenzposition und somit Ungenauigkeiten bei der folgenden Einstellung der gewünschten Position zu vermeiden, wird die Einstellvorrichtung vor dem Montieren der Oberleitung vorzugsweise am Fahrdraht fixiert. Diese Fixierung geschieht vorteilhafterweise durch Klemmelemente oder dgl., welche rasch und einfach vom jeweiligen Monteur bedient werden können. Durch die Fixierung der Einstellvorrichtung am Fahrdraht der Oberleitung hat der Monteur auch beide Hände für andere Tätigkeiten, insbesondere das Öffnen und Schließen der Klemme des Drehauslegers, frei.

Wie bereits oben erwähnt, wird vorteilhafterweise als Referenzposition die Position des Drehauslegers normal auf die Gleisachse gewählt. Diese Stellung des Drehauslegers normal zur Gleisachse sollte bei üblichen mittleren Betriebstemperaturen des Fahrdrahtes eingenommen werden, so dass der Drehausleger bei tieferen und höheren Temperaturen entsprechend seine Lage innerhalb der zulässigen Grenzen ändern kann.

Die Referenzposition wird vorzugsweise durch eine normal zur Gleisachse an der Einstellvorrichtung befestigte Lichtquelle, insbesondere einer Laserlichtquelle an einem Mast, an dem der Drehausleger befestigt ist, eingestellt. Eine derartige optische Methode ist relativ einfach durchführbar und liefert eine hohe Genauigkeit.

Der Einstellwert, um den der Drehausleger von seiner Referenzposition verschoben werden muss, wird vorzugsweise an einer Skala an der Einstellvorrichtung eingestellt.

Gemäß einem weiteren Merkmal der Erfindung ist vorgesehen, dass bei der Ermittlung des Einstellwerts der Zeitpunkt der Montage der Oberleitung zur Berücksichtigung der Reckung der Drähte der Oberleitung einbezogen wird. Da dies bei bekannten Verfahren bisher nicht durchgeführt wurde, war eine Nachjustierung der Montage der Oberleitung an Drehauslegern erforderlich. Durch diese zusätzliche Berücksichtigung der Reckung der Drähte der Oberleitung besteht somit keine Erfordernis der Nachjustierung der Montage der Oberleitung und es werden somit Kosten gespart.

Gelöst wird die erfindungsgemäße Aufgabe auch durch eine oben genannte Vorrichtung zur Einstellung der Position eines Drehauslegers an einem Fahrdraht einer Oberleitung, wobei das Messelement zur Berücksichtigung der Lage zur Gleisachse gegenüber den Aufhängevorrichtungen verstellbar angeordnet ist. Wie bereits oben erwähnt, wird durch die Verstellung des Messelements gegenüber der Gleisachse bzw. den Aufhängevorrichtungen der Bezug auf die Gleisachse exakt hergestellt und somit eine höhere Genauigkeit bei der Ermittlung der Referenzposition und in der Folge eine höhere Genauigkeit bei der Einstellung der gewünschten Lage des Drehauslegers erzielt.

Dabei kann das Messelement über Verschiebeleisten oder dgl. mit den Aufhängevorrichtungen verbunden sein. Über die Verschiebeleisten oder dgl. kann somit eine Verstellung des Messelements in Bezug auf die Aufhängevorrichtungen, welche am Fahrdraht angeordnet sind, erreicht werden. Dadurch kann ein Ausgleich geschaffen werden, wenn die Oberleitung in unterschiedlichen Winkeln zum Drehausleger und von diesem weg verlaufen. Die entsprechenden Werte, um welche das Messelement an den Verschiebeleisten verschoben werden muss, können messtechnisch oder durch Berechnung ermittelt und an den Verschiebeleisten eingestellt werden.

Zur Unterstützung ist an den Verschiebeleisten oder dgl. vorzugsweise eine Skala angeordnet, an welcher die gewünschten Verschiebewerte eingestellt bzw. abgelesen werden können.

Zur Einstellung des Einstellwerts, um den der Drehausleger gegenüber der ermittelten Referenzposition versetzt angeordnet werden soll, ist am Messelement vorzugsweise auch eine Skala oder dgl. angeordnet.

Um eine horizontale Lage des Messelements der Einstellvorrichtung zu erzielen, ist das Messelement vorzugsweise in zur Gleisachse im Wesentlichen normaler Richtung horizontal ausrichtbar.

Diese horizontale Ausrichtung kann durch ein verschwenkbar angeordnetes Gewicht erzielt werden.

Alternativ oder zusätzlich zur oben erwähnten Verschiebung des Messelements in Bezug auf die Aufhängevorrichtungen, kann das Messelement eine gegenüber den Aufhängevorrichtungen verdrehbare Drehleiste beinhalten. Dadurch kann die Drehleiste gegenüber dem Messelement und den Aufhängevorrichtungen verdreht werden, bis eine parallele Orientierung zur Gleisachse gegeben ist. In dieser Orientierung wird dann das beispielsweise von einem Laser erzeugte im rechten Winkel zur Drehleiste ausgesandte Licht an den Mast des Drehauslegers gerichtet, wodurch die Referenzposition exakt bestimmt werden kann.

An der Drehleiste befindet sich wiederum vorzugsweise eine Skala oder dgl. zur Einstellung des Einstellwerts, um den der Drehausleger gegenüber der Referenzposition verstellt werden soll. Nach der Einstellung der Referenzposition kann der Drehausleger um die durch den Einstellwert gegebenen Position verschoben und an dieser Stelle fixiert werden oder vorher die gewünschte Stelle am Fahrdraht markiert werden, danach die Einstellvorrichtung entfernt werden und schließlich der Drehausleger an der markierten Stelle befestigt werden.

Wie bereits oben erwähnt, sind die Mittel zur Ermittlung der Referenzposition des Drehauslegers vorzugsweise durch eine am Messelement oder der Drehleiste normal dazu angeordnete Lichtquelle, insbesondere Laserlichtquelle, gebildet.

Von Vorteil ist es, wenn die Lichtquelle gegenüber einer horizontalen Ausrichtung verschwenkbar angeordnet ist, so dass die Referenzposition auch dann eingestellt werden kann, wenn kein senkrecht angeordneter Mast, sondern beispielsweise eine Aufhängung der Oberleitung in einer Tunnelwandung, vorgesehen ist.

Um ein Verschieben der Einstellvorrichtung nach Ermittlung der Referenzposition zu verhindern, kann ein Element zur Fixierung am Fahrdraht der Oberleitung vorgesehen sein. Dieses Fixierelement kann unterschiedlich ausgebildet sein.

Zur Überprüfung der waagrechten Lage der Einstellvorrichtung, kann zumindest eine Einrichtung zur Messung der horizontalen Ausrichtung, insbesondere eine Wasserwaage, vorgesehen sein.

Die vorliegende Erfindung wird anhand der beigefügten Zeichnungen, welche Prinzipskizzen und Ausführungsformen der erfindungsgemäßen Vorrichtung zeigen, näher erläutert.

Darin zeigen:
Fig. 1 eine Prinzipskizze einer entlang einer Gleisachse verlaufenden Oberleitung;
Fig. 2 die Draufsicht auf eine Ausführungsform einer erfindungsgemäßen Einstellvorrichtung;
Fig. 3 die Seitenansicht auf die Vorrichtung gemäß Fig. 2;
Fig. 4 das Prinzip der Anwendung der Vorrichtung gemäß den Fig. 2 und 3;
Fig. 5 die Draufsicht auf eine andere Ausführungsform einer Vorrichtung zur Einstellung der Position eines Drehauslegers;
Fig. 6 die Seitenansicht auf die Vorrichtung gemäß Fig. 5;
Fig. 7 die Vorderansicht auf die Vorrichtung gemäß Fig. 5; und
Fig. 8 die prinzipielle Anwendung der Vorrichtung gemäß den Fig. 5 bis 7 zur Einstellung der Position eines Drehauslegers.

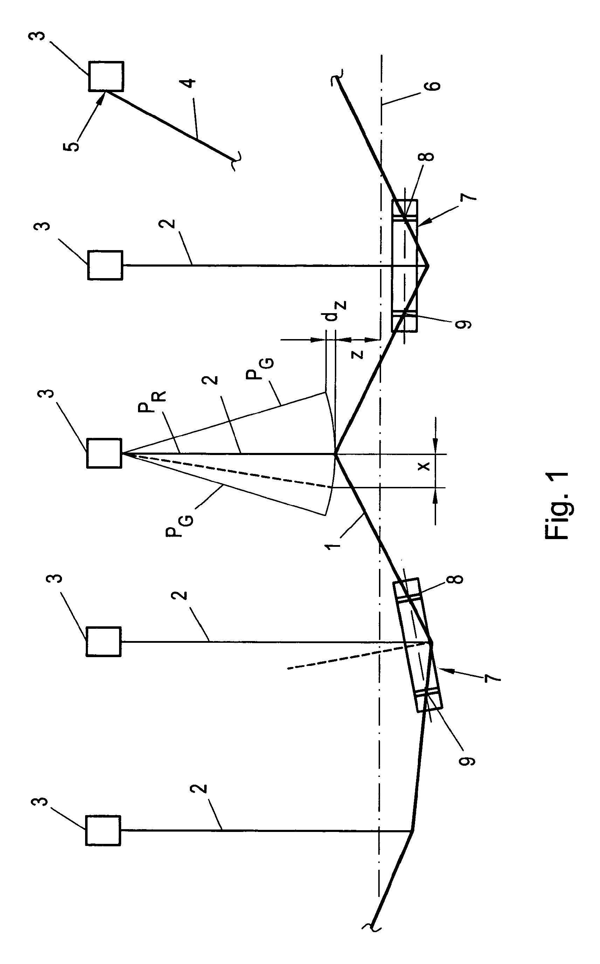

Fig. 1 zeigt den prinzipiellen Verlauf einer Oberleitung 1 entlang beispielsweise einer Bahnstrecke. Die Oberleitung 1 ist in bekannter Weise in Abschnitte bestimmter Länge geteilt und umfasst in der Regel ein Längstragseil und einen Fahrdraht 4. Fig. 1 zeigt schematisch einen solchen Abschnitt der Oberleitung 1 in der Ansicht von oben. Die Oberleitung 1 wird über Drehausleger 2, welche üblicherweise an Masten 3, welche entlang der Bahnstrecke angeordnet sind, befestigt sind, montiert. Anstelle der Masten 3 können auch andere tragenden Elemente, wie z.B. Mauern, Pfeiler, Hängesäulen (die wiederum an Tunnelwänden, Kunstbauten, Quertragjochen oder ähnlichen Teilen) und dgl., verwendet werden. Ein Fahrdraht 4 der Oberleitung 1 wird an einem Ende 5 beispielsweise an einem Mast 3 fest verankert. Das andere Ende des Fahrdrahtes 4 der Oberleitung 1 ist an einer hinlänglich bekannten Nachspanneinrichtung befestigt, um immer eine ausreichende Spannung der Oberleitung 1 zu gewährleisten (nicht dargestellt). Zwischen diesen Enden des Fahrdrahtes 4 der Oberleitung 1 wird der Fahrdraht 4 der Oberleitung 1 an einer Anzahl von Drehauslegern 2 aufgehängt. Die Anzahl der Drehausleger 2 ist vom Verlauf der Bahnstrecke und anderen Bedingungen abhängig. Wie bereits oben erwähnt, verläuft die Oberleitung 1 in Bezug auf die Gleisachse 6 im Wesentlichen zickzackförmig, so dass der Stromabnehmer des Schienenfahrzeugs immer an unterschiedlichen Stellen mit dem Fahrdraht der Oberleitung 1 kontaktiert. Die maximalen Abstände z der Projektion der Oberleitung 1 auf die Gleisachse 6 werden bei einer beispielsweise temperaturbedingten Veränderung der Lage eines Drehauslegers 2 durch einen Wert dz vergrößert. Dieser Wert dz der Abweichung der Lage der Oberleitung 1 von der Gleisachse 6 darf für eine einwandfreie Abnahme elektrischer Energie durch den auf dem Schienenfahrzeug montierten Abgreifbügel ein gewisses Maß nicht überschreiten. In der Folge darf die Lage der Drehausleger 2 gewisse Grenzen P_{G} nicht überschreiten. Aus diesem Schema wird ersichtlich, dass der Referenzposition P_{R} der Drehausleger 2 besondere Bedeutung zukommt. Bei der Referenzposition P_{R} des Drehauslegers 2 handelt es sich insbesondere um die normal auf die Gleisachse 6 stehende Richtung, welche bei einer Durchschnittstemperatur eingenommen wird. Von dieser Referenzposition P_{R} muss der Drehausleger 2 in Abhängigkeit der herrschenden Temperatur, um einen rechnerisch ermittelten Einstellwert X verstellt werden, so dass das Einhalten der Grenzen P_{G} des Drehauslegers 2 sicher gewährleistet wird.

Bei der Ermittlung des Einstellwerts X wird erfindungsgemäß vorzugsweise neben der herrschenden Temperatur auch die Zeit, welche seit der Montage bzw. Spannung der Oberleitung 1 verlaufen ist, mitberücksichtigt, um die Reckung in die Berechnung einzuschließen.

Wird mit Hilfe einer Einstellvorrichtung 7, welche mit entsprechenden Aufhängevorrichtungen 8, 9 am Fahrdraht 4 der Oberleitung 1 vor und nach einem Drehausleger 2 befestigt wird, die Referenzposition P_{R} ermittelt, kann dies bei symmetrischen Verhältnissen, wie im rechten Teil der Fig. 1 dargestellt, relativ genau auch mit Augenmaß vorgenommen werden. Herrschen jedoch unsymmetrische Bedingungen, wie in Fig. 1 auf der linken Seite dargestellt, würde die exakte Referenzposition P_{R}, d.h. die üblicherweise normale Richtung auf die Gleisachse 6, nicht exakt festgestellt und somit eine exakte Montage der Oberleitung 1 nicht möglich.

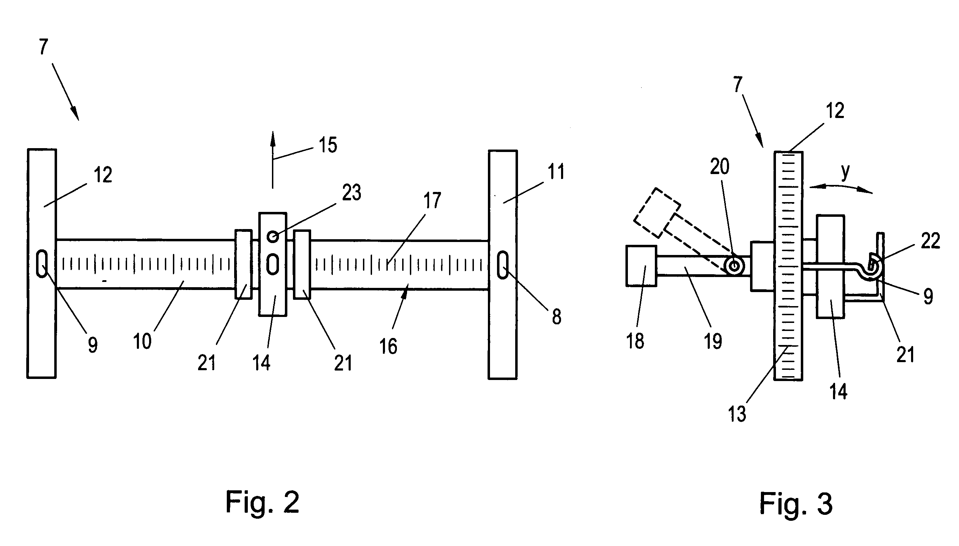

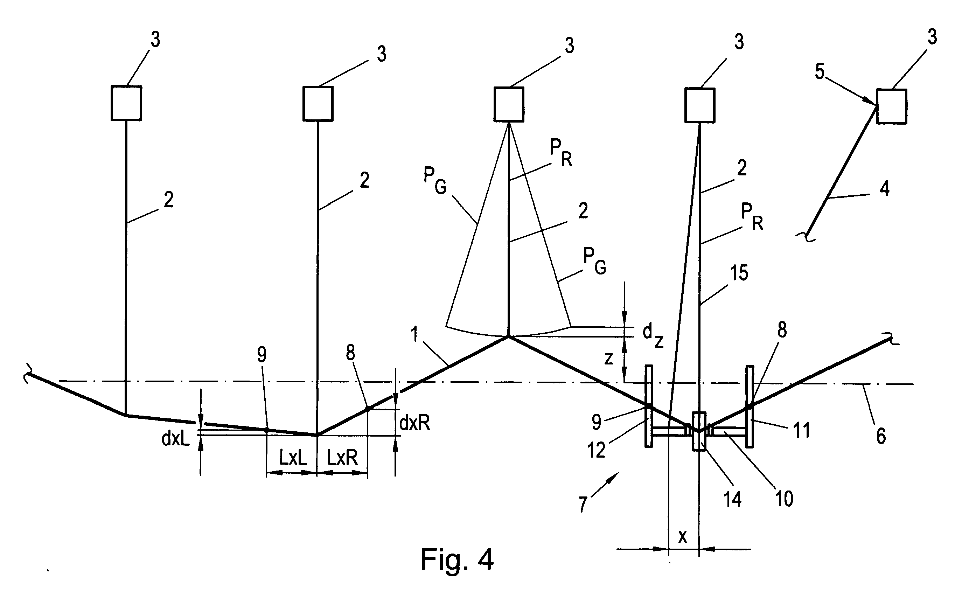

Fig. 2 und 3 zeigen eine Ausführungsform einer Einstellvorrichtung 7, gemäß der vorliegenden Anmeldung, in der Ansicht von oben und von der Seite. Die Einstellvorrichtung 7 umfasst zwei Aufhängevorrichtungen 8, 9, vorzugsweise in Form von Haken, welche im Fahrdraht 4 der Oberleitung 1 eingehängt werden. Die Einstellvorrichtung umfasst ein Messelement 10, welches erfindungsgemäß gegenüber den Vorrichtungen 8, 9 zur Aufhängung am Fahrdraht 4 verstellbar angeordnet ist. Zu diesem Zweck ist das Messelement 10 über zwei Verschiebeleisten 11, 12 mit den Aufhängevorrichtungen 8, 9 verbunden. Wird nun das Messelement 10 über die Verschiebeleisten 11, 12 verschoben, kann eine Verschiebung erfolgen, bis das Messelement 10 parallel zur Gleisachse 6 orientiert ist (s. Fig. 4). Zur Einstellung der entsprechenden Werte für die Verschiebung des Messelements 10, können Skalen 13 auf den Verschiebeelementen 11, 12 angeordnet sein. Am Messelement 10 sind Mittel 14 zur Ermittlung der Referenzposition P_{R} des Drehauslegers 2 angeordnet, welche beispielsweise durch eine Laserlichtquelle gebildet sein kann, welche in normaler Richtung zum Messelement 10 einen Laserstrahl 15 aussendet. Weiters sind am Messelement 10 der Einstellvorrichtung 7 Mittel 16 zur Einstellung des Einstellwerts X vorgesehen, welche beispielsweise durch eine Skala 17 gebildet sein können.

Um eine horizontale Ausrichtung der Vorrichtung 7 auch bei gegenüber den Aufhängevorrichtungen 8, 9 verschobenem Messelement 10, zu erzielen, kann ein Gewicht 18 über ein Gestänge 19 und ein Drehgelenk 20 angeordnet sein. Das Mittel zur Ermittlung der Referenzposition P_{R} des Drehauslegers 2, insbesondere die Laserlichtquelle, kann verschwenkbar ausgebildet sein, was in Fig. 3 durch den Pfeil y gekennzeichnet ist. Zusätzlich kann über Tarierschienen 21 die waagrechte Lage der Vorrichtung 7 erreicht werden. Die Tarierschienen 21 können beim Befestigen der Vorrichtung 7 am Fahrdraht 4 vorzugsweise aufgeklappt werden und danach über dem Fahrdraht 4 wieder eingeklappt werden. Die Tarierschienen 21 unterstützten zusätzlich die waagrechte Lage der Vorrichtung 7. An einer Aufhängevorrichtung 8, 9 kann ein Fixierelement 22 (nicht dargestellt) zur Fixierung der Vorrichtung 7 am Fahrdraht 4 der Oberleitung 1 angeordnet sein. Zusätzlich kann zur Überprüfung der waagrechten Lage des Messelements 10 der Vorrichtung 7 eine Einrichtung 23 zur Messung der horizontalen Ausrichtung, insbesondere eine Wasserwaage, vorgesehen sein.

Fig. 4 zeigt nun die Anwendung der Vorrichtung 7 gemäß den Fig. 2 und 3 im Prinzip. Demgemäß wird die Vorrichtung 7 an der Oberleitung 1 über die Aufhängevorrichtungen 8 und 9 aufgehängt und das Messelement 10 über die Verschiebeleisten 11, 12 solange verschoben, bis das Messelement 10 parallel zur Gleisachse 6 ausgerichtet ist. Dies erfolgt dadurch, dass die gemessenen oder berechneten Werte der Abstände dxL und dxR an den Verschiebeleisten 11 und 12 an dafür vorgesehenen Skalen 13 eingestellt werden. Danach wird das Mittel 14 zur Ermittlung der Referenzposition P_{R} aktiviert, so dass ein Laserstrahl 15 normal zum Messelement 10 und somit auch normal zur Gleisachse 6 ausgesandt wird, bis er am Mast 3 auftrifft. Somit kann die Referenzposition P_{R} des Drehauslegers 2 exakt bestimmt werden. Danach wird der Drehausleger 2 nun um den temperatur- und zeitabhängigen Einstellwert X verschoben und mit der Oberleitung 1 verklemmt. Der Einstellwert X kann aufgrund des bekannten Abstands des Drehauslegers 2 vom fest verankerten Ende 5 des Fahrdrahtes 4, der herrschenden Temperatur und dem zeitlichen Abstand von der Belastung des Fahrdrahtes 4 mit Zugspannung rechnerisch ermittelt werden. Dieser Vorgang wird für jeden Drehausleger 2 des Abschnitts wiederholt, bis alle Drehausleger 2 temperatur- und zeitabhängig eingestellt wurden. Im Laufe der Zeit wird der Endzustand der Länge des Fahrdrahtes 4 durch die Reckung erreicht und die Drehausleger 2 stehen, abhängig von der Temperatur, in der gewünschten Lage. Ändert sich die Temperatur, so bewegen sich alle Drehausleger 2, aufgrund der genauen Einstellung gleichmäßig in der vorgesehenen Weise und es wird verhindert, dass der seitliche Abstand (z+dz) der Oberleitung 1 von der Gleisachse 6 eine obere Grenze überschreitet (s. Fig. 1).

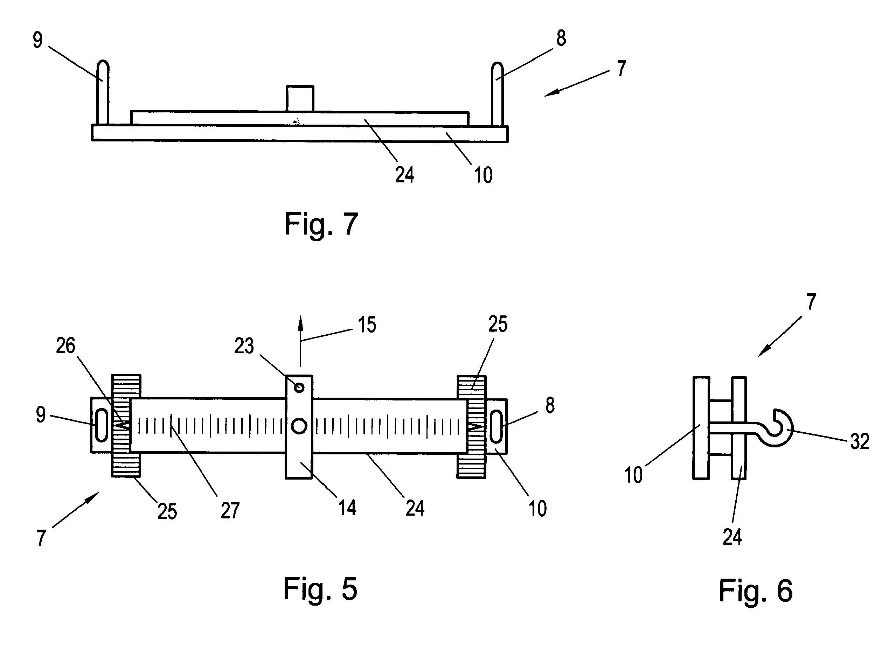

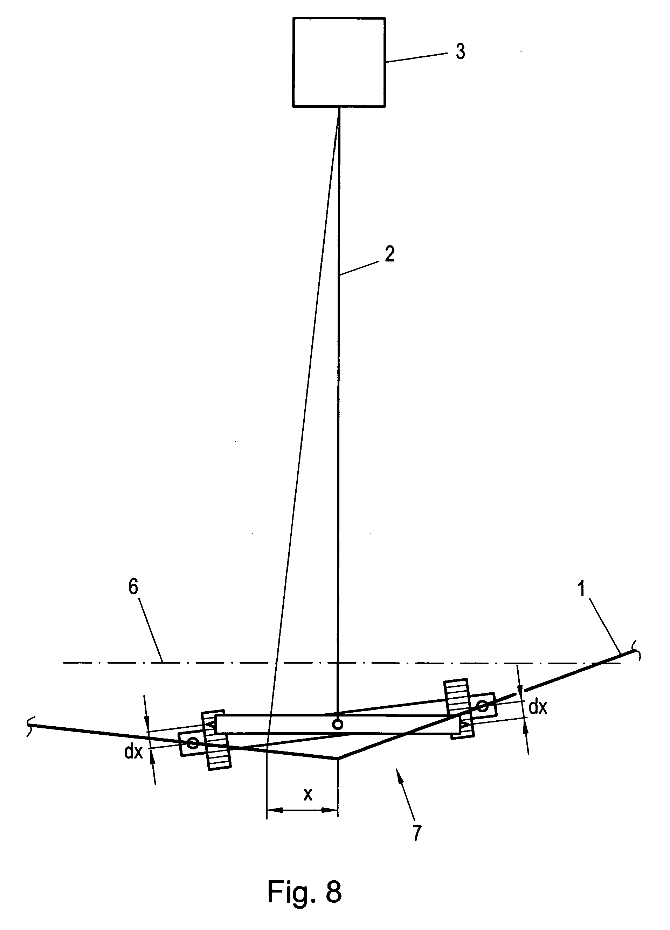

Fig. 5 bis 7 zeigen verschiedene Ansichten auf eine andere Ausführungsform einer Vorrichtung 7, umfassend ein Messelement 10, welches über Aufhängevorrichtungen 8, 9 am Fahrdraht 4 der Oberleitung 1 befestigt werden kann. Am Messelement 10 ist eine gegenüber den Aufhängevorrichtungen 8, 9 verdrehbare Drehleiste 24 angeordnet, so dass diese parallel zur Gleisachse 6 orientiert werden kann (s. Fig. 8). Die gewünschte Einstellung der Verdrehung kann, anhand von Skalen 25 auf die entsprechende Zeiger 26 der Drehleiste 24 weisen, vorgenommen werden. Zur Einstellung des Einstellwerts X kann an der Drehleiste 24 eine weitere Skala 27 vorgesehen sein. Drehfest mit der Drehleiste 24 verbunden, ist wiederum ein Mittel 14 zur Ermittlung der Referenzposition P_{R}, welches beispielsweise durch eine Laserlichtquelle oder dgl. gebildet ist, welche einen Laserstrahl 15 in normaler Richtung zur Drehleiste 24 aussendet. Vorteilhaft bei diese Ausführungsform ist, dass keine Maßnahmen gesetzt werden müssen, um eine waagrechte Lage der Vorrichtung 7 bei verschiedenen Stellungen der Drehleiste 24 zu erzielen. Zur Überprüfung der waagrechten Lage, kann natürlich eine Messeinrichtung 23, insbesondere eine Wasserwaage, an der Einstellvorrichtung 7 angeordnet sein.

Fig. 8 erläutert nun die Anwendung der Einstellvorrichtung 7 gemäß den Fig. 5 bis 7 bei der Einstellung der Montage einer Oberleitung 1 an einem Drehausleger 2. Die Einstellvorrichtung 7 wird wiederum beiderseits der Fixierung des Drehauslegers 2 am Fahrdraht 4 der Oberleitung 1 über die Aufhängevorrichtungen 8, 9 aufgehängt und die Drehleiste 24 entsprechend den gemessenen oder berechneten Werten für dx, die aus den durch die Geometrie der Oberleitung bestimmten Werten dxL und dxR (s. Fig. 4) abgeleitet ist, so verdreht, dass sie parallel zur Gleisachse 6 orientiert ist. Somit kann die Referenzposition P_{R} des Drehauslegers 2 exakt ermittelt werden. Anschließend wird der berechnete Einstellwert X an der Skala 27 (s. Fig. 5) der Drehleiste 24 eingestellt und der Drehausleger 2 entsprechend mit der Oberleitung 1 verbunden. Durch eine Referenzierung der Vorzeichen des Wertes dx auf Anfang und Ende der Bahnstrecke ist eine einfache und leicht zu kommunizierende Handhabung gewährleistet.

Durch die exakte Festlegung der Referenzposition P_{R} der Drehausleger 2 kann nunmehr eine exakte Einstellung vorgenommen werden. Das gegenständliche Verfahren und die gegenständliche Vorrichtung 7 zeichnen sich durch besondere Einfachheit und rasche Anwendbarkeit aus.

## Patentansprüche

1. Verfahren zur Montage einer entlang einer Gleisachse (6) verlaufenden Oberleitung (1), bei dem ein an einem Ende fest verankerter und am anderen Ende gespannter Fahrdraht (4) der Oberleitung (1) an einem Drehausleger (2) aufgehängt wird, indem eine Einstellvorrichtung (7) am Fahrdraht (4) der Oberleitung (1) beiderseits des Drehauslegers (2) angeordnet wird und der Drehausleger (2) um einen unter Berücksichtigung der aktuellen Temperatur (T) und der Länge (L) des Fahrdrahtes (4) vom fest verankerten Ende (5) zum Drehausleger (2) ermittelten Einstellwert (X), der an der Einstellvorrichtung (7) eingestellt wird, gegenüber einer Referenzposition (P_{R}) des Drehauslegers (2) verstellt wird, **dadurch gekennzeichnet, dass** zur Ermittlung der Referenzposition (P_{R}) des Drehauslegers (2) die Einstellvorrichtung (7) parallel zur Gleisachse (6) angeordnet wird.

2. Verfahren nach Anspruch 1, **dadurch gekennzeichnet, dass** die Einstellvorrichtung (7) gegenüber dem Fahrdraht (4) verschoben wird, bis die Einstellvorrichtung (7) parallel zur Gleisachse (6) angeordnet ist.

3. Verfahren nach Anspruch 1 oder 2, **dadurch gekennzeichnet, dass** die Einstellvorrichtung (7) gegenüber dem Fahrdraht (4) verdreht wird, bis die Einstellvorrichtung (7) parallel zur Gleisachse angeordnet ist.

4. Verfahren nach einem der Ansprüche 1 bis 3, **dadurch gekennzeichnet, dass** die Einstellvorrichtung (7) waagrecht gehalten wird.

5. Verfahren nach einem der Ansprüche 1 bis 4, **dadurch gekennzeichnet, dass** die Einstellvorrichtung (7) am Fahrdraht (4) fixiert wird.

6. Verfahren nach einem der Ansprüche 1 bis 5, **dadurch gekennzeichnet, dass** als Referenzposition (P_{R}) die Position des Drehauslegers (2) normal auf die Gleisachse (6) herangezogen wird.

7. Verfahren nach Anspruch 6, **dadurch gekennzeichnet, dass** die Referenzposition (P_{R}) durch eine normal zur Gleisachse (6) an der Einstellvorrichtung (7) befestigte Lichtquelle an einem Mast (3), an dem der Drehausleger (2) befestigt ist, eingestellt wird.

8. Verfahren nach einem der Ansprüche 1 bis 7, **dadurch gekennzeichnet, dass** der Einstellwert (X) an einer Skala (17) auf der Einstellvorrichtung (7) eingestellt wird.

9. Verfahren nach einem der Ansprüche 1 bis 8, **dadurch gekennzeichnet, dass** bei der Ermittlung des Einstellwerts (X) der Zeitpunkt der Montage der Oberleitung (1) zur Berücksichtigung der Reckung der Drähte (4) der Oberleitung (1) einbezogen wird.

10. Vorrichtung (7) zur Einstellung der Position (P) eines Drehauslegers (2) an einem an einem Ende (5) fest verankerten und am anderen Ende gespannten Fahrdraht (4) einer entlang einer Gleisachse (6) verlaufenden Oberleitung (1) um einen unter Berücksichtigung der aktuellen Temperatur (T) und der Länge (L) des Fahrdrahtes (4) vom fest verankerten Ende (5) zum Drehausleger (2) ermittelten Einstellwert (X) gegenüber einer Referenzposition (P_{R}), mit einem über Aufhängevorrichtungen (8, 9) am Fahrdraht (4) der Oberleitung (1) aufhängbaren Messelement (10) mit Mitteln (14) zur Ermittlung der Referenzposition (P_{R}) des Drehauslegers (2), und mit einem Mittel (16) zur Einstellung des Einstellwerts (X), **dadurch gekennzeichnet, dass** das Messelement (10) zur Berücksichtigung der Lage zur Gleisachse (6) gegenüber den Aufhängevorrichtung (8, 9) verstellbar angeordnet ist.

11. Vorrichtung (7) nach Anspruch 10, **dadurch gekennzeichnet, dass** das Messelement (10) über Verschiebeleisten (11, 12) oder dgl. mit den Aufhängevorrichtungen (8, 9) verbunden ist.

12. Vorrichtung (7) nach Anspruch 11, **dadurch gekennzeichnet, dass** an den Verschiebeleisten (11, 12) oder dgl. eine Skala (13) angeordnet ist.

13. Vorrichtung (7) nach Anspruch 11 oder 12, **dadurch gekennzeichnet, dass** am Messelement (10) eine Skala (17) oder dgl. zur Einstellung des Einstellwerts (X) angeordnet ist.

14. Vorrichtung (7) nach einem der Ansprüche 11 bis 13, **dadurch gekennzeichnet, dass** das Messelement (10) in zur Gleisachse (6) im Wesentlichen normaler Richtung horizontal ausrichtbar ist.

15. Vorrichtung (7) nach Anspruch 14, **dadurch gekennzeichnet, dass** ein verschwenkbar angeordnetes Gewicht (18) zur horizontalen Ausrichtung vorgesehen ist.

16. Vorrichtung (7) nach einem der Ansprüche 10 bis 15, **dadurch gekennzeichnet, dass** das Messelement (10) eine gegenüber den Aufhängevorrichtungen (8, 9) verdrehbare Drehleiste (24) beinhaltet.

17. Vorrichtung (7) nach Anspruch 16, **dadurch gekennzeichnet, dass** eine Skala (25) zur Einstellung der Verdrehung der Drehleiste (24) gegenüber den Aufhängevorrichtungen (8, 9) vorgesehen ist.

18. Vorrichtung (7) nach Anspruch 16 oder 17, **dadurch gekennzeichnet, dass** an der Drehleiste (24) eine Skala (27) oder dgl. zur Einstellung des Einstellwerts (X) angeordnet ist.

19. Vorrichtung (7) nach einem der Ansprüche 10 bis 18, **dadurch gekennzeichnet, dass** die Mittel (14) zur Ermittlung der Referenzposition (P_{R}) des Drehauslegers (2) durch eine am Messelement (10) oder der Drehleiste (24) normal dazu angeordneten Lichtquelle, insbesondere Laserlichtquelle, gebildet ist.

20. Vorrichtung (7) nach Anspruch 19, **dadurch gekennzeichnet, dass** die Lichtquelle gegenüber einer horizontalen Ausrichtung verschwenkbar angeordnet ist.

21. Vorrichtung (7) nach einem der Ansprüche 10 bis 20, **dadurch gekennzeichnet, dass** ein Element (22) zur Fixierung am Fahrdraht (4) der Oberleitung (1) vorgesehen ist.

22. Vorrichtung (7) nach einem der Ansprüche 10 bis 21, **dadurch gekennzeichnet, dass** zumindest eine Einrichtung (23) zur Messung der horizontalen Ausrichtung, insbesondere eine Wasserwaage, vorgesehen ist.
